# DEMANDE DE BREVET EUROPEEN

(11) **EP 0 977 380 A1**
(43) Date de publication de la demande: **02.02.2000**
(21) Numéro de dépôt: 99460046.8
(22) Date de dépôt: 02.07.1999
(51) Int. Cl.: H04B 7/26

(54) **Système de radiocommunication cellulaire mettant en oeuvre une répétition de données en aval d'une station de base, et dispositif de répétition de données correspondant**

(30) Priorité: 30.07.1998 FR 9809959
(71) Demandeur: Societé Francaise du Radiotéléphone SRF, 92915 Paris la Défence (FR)
(72) Inventeur: Remy, Jean-Gabriel, 94170 Le Perreux (FR)
(74) Mandataire: Vidon, Patrice

(57) **Abrégé**

L'invention concerne un système de radiocommunication cellulaire, du type comprenant au moins une station de base (1) et au moins un dispositif de répétition de données (51) destiné à assurer, en aval de la station de base, une interface radio dans une zone de répétition, pour une partie d'un flux de données géré par la station de base. La station de base fonctionne selon un premier mode de radiocommunication et avec de premières ressources de communication. Selon l'invention, une partie des premières ressources de communication est utilisée pour relier, sous forme de liaison hertzienne (6) selon le premier mode de radiocommunication, la station de base et un élément de répétition distant compris dans le dispositif de répétition. L'élément de répétition distant assure une conversion vers de secondes ressources de communication et un second mode de radiocommunication, distincts respectivement du premier mode de radiocommunication et de la partie des premières ressources de communication. L'élément de répétition distant et au moins une station mobile (3) se trouvant dans la zone de répétition échangent des données selon le second mode de radiocommunication et en utilisant les secondes ressources de communication.

## Description

Le domaine de l'invention est celui des systèmes de radiocommunication cellulaire. L'invention s'applique donc notamment, mais non exclusivement, aux systèmes UMTS (pour "Universal Mobile Telephone System - 2 GHz" en anglais), GSM 900 (pour "Global System for Mobile - 900 Mhz" en anglais), DCS 1800 (pour "Digital Cellular System - 1800 Mhz" en anglais), PCS 1900 (pour "Personal Communication System - 1900 MHz" en anglais), etc.

Plus précisément, la présente invention concerne un système de radiocommunication cellulaire mettant en oeuvre une répétition de données en aval d'une station de base, ainsi qu'un dispositif permettant une telle répétition de données. Un tel dispositif est fréquemment aussi appelé "répéteur".

On rappelle que, d'une façon générale, un système de radiocommunication cellulaire comprend une pluralité de stations de base, chacune assurant la couverture radio d'une cellule géographique distincte et pouvant communiquer avec une pluralité de stations mobiles présents dans cette cellule. En d'autres termes, le système de radiocommunication permet de communiquer avec des stations mobiles se déplaçant au sein d'un réseau de cellules géographiques.

Il s'avère que la couverture radio assurée par les différentes stations de base est parfois insuffisante. C'est par exemple le cas si une cellule comporte une "zone d'ombre" (par exemple une zone encaissée ou en cuvette), dans laquelle la station de base ne peut pas assurer correctement la couverture radio. C'est également le cas si l'on souhaite assurer la couverture radio d'une zone située à l'extérieur du réseau de cellules.

Une première solution connue pour compléter une couverture radio globale existante (c'est-à-dire un réseau de cellules existant) consiste à ajouter de nouvelles stations de base. On comprend aisément que cette première solution connue est peu adaptée et très coûteuse (tant en termes de matériels que de ressources en fréquences), notamment si le trafic des zones à couvrir est faible. En effet, outre le coût très important de mise en oeuvre pour l'opérateur du système, cette première solution pose un problème très délicat de planification de l'attribution des fréquences, puisque des cellules adjacentes se voient impérativement attribuer des groupes de fréquences distincts dans le but de réduire ou supprimer les phénomènes d'interférence entre cellules adjacentes.

Une seconde solution connue pour compléter un réseau de cellules existant consiste à utiliser au moins un dispositif de répétition de données, ou "répéteur", relié à une station de base par une liaison spécialisée. Dans la présente description, on entend par "liaison spécialisée" toute liaison, généralement filaire, mettant en oeuvre des moyens de transmission distincts de ceux compris dans le système de radiocommunication. Le répéteur répète une partie du flux de données géré en amont par la station de base. Il assure donc une couverture radio complémentaire de celle de la station de base, dans une zone géographique prédéterminée, dite zone de répétition.

Si cette seconde solution connue permet d'éviter l'ajout de nouvelles stations de base, elle présente en revanche un inconvénient majeur. En effet, la liaison spécialisée entre la station de base et le répéteur est coûteuse. En outre, cette liaison spécialisée est généralement surdimensionnée, car la zone de répétition est souvent à faible trafic.

L'invention a notamment pour objectif de pallier ces différents inconvénients de l'état de la technique.

Plus précisément, l'un des objectifs de la présente invention est de fournir un système de radiocommunication cellulaire mettant en oeuvre une répétition de données en aval d'une station de base, ce système mettant en oeuvre au moins un répéteur mais ne nécessitant aucune liaison spécialisée entre la station de base et le répéteur.

Cet objectif, ainsi que d'autres qui apparaîtront par la suite, sont atteints selon un premier mode de réalisation de l'invention à l'aide d'un système de radiocommunication cellulaire, du type comprenant au moins une station de base et au moins un dispositif de répétition de données destiné à assurer, en aval de ladite station de base, une interface radio dans une zone géographique prédéterminée, dite zone de répétition, pour une partie d'un flux de données géré en amont par ladite station de base, ladite station de base fonctionnant selon un premier mode de radiocommunication et avec de premières ressources de communication,
caractérisé en ce que ledit dispositif de répétition comprend un élément de répétition distant de ladite station de base,
en ce qu'une partie desdites premières ressources de communication est utilisée pour relier, sous forme de liaison hertzienne selon ledit premier mode de radiocommunication, la station de base et l'élément de répétition distant,
et en ce que ledit élément de répétition distant assure une conversion, correspondant au passage de ladite partie des premières ressources de communication et dudit premier mode de radiocommunication à de secondes ressources de communication et à un second mode de radiocommunication, et réciproquement, ledit second mode de radiocommunication et/ou lesdites secondes ressources de communication étant distincts respectivement dudit premier mode de radiocommunication et de ladite partie des premières ressources de communication,
ledit élément de répétition distant et au moins une station mobile se trouvant dans ladite zone de répétition échangeant des données selon ledit second mode de radiocommunication et en utilisant lesdites secondes ressources de communication.

Ce premier mode de réalisation de l'invention repose donc sur un double principe.

En effet, il consiste, d'une part, à utiliser le (premier) mode et les (premières) ressources de communication de la station de base pour relier la station de base et l'élément de répétition distant. En d'autres termes, la station de base utilise une partie de ses canaux de communication pour communiquer avec l'élément de répétition distant, ce dernier se comportant vis-à-vis de la station de base comme une ou plusieurs stations mobiles arrêtées. Ainsi, la présente invention ne nécessite ni station de base supplémentaire, ni liaison spécialisée, et constitue donc une solution beaucoup moins coûteuse que les solutions connues précitées.

Ce premier mode de réalisation est notamment parfaitement adapté au cas où la station de base gère un flux de données important, puisque dans ce cas une partie de ce flux peut facilement être affectée à la liaison hertzienne de radiocommunication avec l'élément de répétition distant. Ceci est par exemple le cas avec une station de base fonctionnant selon un mode de radiocommunication "large bande", tel que le mode W/CDMA (pour "Wide band / Code Division Multiple Access" en anglais) de l'UMTS. On rappelle que ce mode est basé sur un multiplexage en codes (Accès Multiple à Répartition par Codes), en large bande.

Ce premier mode de réalisation de l'invention consiste, d'autre part, à différencier l'amont et l'aval de l'élément de répétition distant. En effet, selon l'invention, en amont, l'élément de répétition distant communique avec la station de base selon le premier mode de radiocommunication et en utilisant les premières ressources de communication, tandis qu'en aval, l'élément de répétition distant communique avec des stations mobiles selon le second mode de radiocommunication et en utilisant les secondes ressources de communication. De cette façon, on réduit ou supprime les sources d'interférence et/ou de brouillage. En outre, on évite tout risque d'accrochage de l'amont vers l'aval.

De façon avantageuse, la station de base et l'élément de répétition distant comprennent chacun au moins une antenne intelligente directive pour mettre en oeuvre ladite liaison hertzienne selon le premier mode de radiocommunication.

En d'autres termes, la station de base et l'élément de répétition distant comprennent chacun au moins une antenne intelligente à adaptation de faisceaux (ou "Adaptative Smart Antennas" en anglais), de façon que la station de base oriente son(ses) faisceau(x) rayonnant(s) sur l'élément de répétition distant, et réciproquement.

Il s'agit donc d'une utilisation avantageuse de la technique de multiplexage spatial (ou SDMA, pour "Spatial Division Multiple Access" en anglais). On rappelle que, de façon classique, cette technique permet à la station de base de réutiliser une même fréquence ou un même code, au sein d'une même cellule, pour communiquer avec différentes stations mobiles. Au vu des résultats obtenus en GSM, on peut espérer réutiliser, en UMTS, une même fréquence ou un même code avec un écartement angulaire de l'ordre de 25 à 30° en azimut.

Dans le cadre de la présente invention, la technique SDMA permet de réutiliser, pour des communications directes entre la station de base et des stations mobiles, la ou les fréquences ou codes utilisées pour la liaison hertzienne de radiocommunication entre la station de base et l'élément de répétition distant. Les fréquences ou codes réutilisés ne sont bien sûr pas réalloués aux stations mobiles se trouvant dans la zone angulaire dans laquelle s'effectue la liaison hertzienne de radiocommunication.

Il est à noter que dans le cas de l'UMTS (mode W/CDMA ou TD/CDMA), on tire avantageusement parti de la fréquence relativement élevée du système (à savoir 2 GHz) pour utiliser des antennes intelligentes très directives et à grand gain.

Avantageusement, ladite partie des premières ressources de communication, qui est utilisée pour relier la station de base et l'élément de répétition distant, est variable et allouée de façon dynamique.

Ainsi, la quantité de (premières) ressources de communication de la station de base affectées à la liaison entre la station de base et l'élément de répétition distant peut être fonction de la quantité de trafic que la station de base "sous-traite" réellement à l'élément de répétition distant. Ceci permet d'éviter un surdimensionnement de la liaison hertzienne de radiocommunication entre entre la station de base et l'élément de répétition distant, et donc d'optimiser la quantité de (premières) ressources de communication dont dispose en définitif la station de base pour communiquer directement avec des stations mobiles présentes dans sa cellule.

Préférentiellement, ledit premier mode de radiocommunication appartient au groupe comprenant : le mode W/CDMA de l'UMTS, le mode CDMA du standard IS 95, ... ; et ledit second mode de radiocommunication appartient au groupe comprenant : le mode W/CDMA de l'UMTS, le mode TD/CDMA de l'UMTS, le mode TDMA du GSM 900, le mode TDMA du DCS 1800, le mode TDMA du PCS 1900, le mode CDMA du standard IS 95, ...

Les modes W/CDMA (pour "Wide band / Code Division Multiple Access" en anglais) et TD/CDMA (pour "Time Division / Code Division Multiple Access" en anglais) de l'UMTS sont définis dans la décision de l'ETSI de janvier 1998 concernant l'UMTS ("Universal Mobile Telephone System"), cette décision étant insérée ici par référence. On rappelle en effet que l'interface radio de l'UMTS a été arrêtée dans ses grandes lignes en janvier 1998. Les modes W/CDMA et TD/CDMA utilisent tous les deux un accès CDMA sur canalisation à 5 MHz.

Le mode W/CDMA de l'UMTS est basé sur un multiplexage en codes des communications avec les stations mobiles (Accès Multiple à Répartition en codes), combiné à un duplexage en fréquences de l'émission et de la réception (ou FDD, pour "Frequency Division Duplex", tel que deux bandes de fréquence distinctes sont utilisées simultanément, l'une en émission et l'autre en réception).

Le mode TD/CDMA de l'UMTS est basé sur un multiplexage en codes des communications avec les stations mobiles, combiné à un duplexage en temps de l'émission et de la réception (ou TDD, pour "Time Division Duplex", tel que la même bande de fréquence est utilisée alternativement en émission et en réception).

Le mode TDMA (pour "Time Division Multiple Access" en anglais) du GSM ou du DCS est basé sur un multiplexage temporel (Accès Multiple à Répartition dans le Temps).

Dans un premier exemple préférentiel dudit premier mode de réalisation, lesdits premier et second modes de radiocommunication sont les modes W/CDMA et TD/CDMA respectivement ; et en ce que ladite partie des premières ressources et lesdites secondes ressources de communication sont respectivement au moins un premier canal, véhiculé par une première bande de fréquence, et au moins un second canal, véhiculé par une seconde bande de fréquence.

Ainsi, l'élément de répétition distant reprend un canal FDD d'une première bande de fréquence UMTS pour le répéter dans un canal TDD d'une seconde bande de fréquence UMTS. Cette disposition est adaptée pour des dessertes de portée modeste (par exemple jusqu'à 1 km environ), et faible trafic (type "indoor" (intérieur) ou sites encaissés).

Les première et seconde bandes de fréquence sont distinctes, sauf en cas d'utilisation de codes différents dans les premier et second modes de radiocommunication.

On notera que les première et seconde bandes de fréquence font partie des bandes de fréquence réservées, dans le cadre de l'UMTS, à la radiocommunication selon les modes TD/CDMA et W/CDMA respectivement. En effet, ces bandes permettent toutes les deux d'établir des radiocommunications avec des stations mobiles. On rappelle que, dans le cadre de la liaison entre la station de base et l'élément de répétition distant pour laquelle on utilise la première bande, l'élément de répétition distant doit être vu comme une ou plusieurs stations mobiles arrêtées. Il convient de préciser qu'il existe également des bandes de fréquences utilisables pour la radiocommunication selon le mode W/CDMA ou le mode TD/CDMA, mais non réservées à cet effet dans le cadre de l'UMTS, et ne permettant donc pas l'établissement de radiocommunications avec des stations mobiles. De telles bandes "non réservées", telles que par exemple des bandes de fréquences optiques, sont utilisées notamment dans second exemple préférentiel du second mode de réalisation de l'invention, discuté en détail par la suite.

Dans un second exemple préférentiel dudit premier mode de réalisation, lesdits premier et second modes de radiocommunication sont tous les deux le mode W/CDMA ; et en ce que ladite partie des premières ressources et lesdites secondes ressources de communication sont respectivement au moins un premier canal, véhiculé par une première bande de fréquence, et au moins un second canal, véhiculé par une seconde bande de fréquence, distincte de ladite première bande de fréquence.

Ainsi, l'élément de répétition distant reprend un canal FDD d'une première bande de fréquence pour le répéter dans un autre canal FDD, d'une seconde bande de fréquences utilisée. On notera que dans ce second exemple les première et seconde bandes de fréquences font également partie des bandes de fréquence réservées, dans le cadre de l'UMTS, à la radiocommunication selon le mode W/CDMA.

Dans un troisième exemple préférentiel dudit premier mode de réalisation, lesdits premier et second modes de radiocommunication sont tous les deux le mode W/CDMA, ; ladite partie des premières ressources de communication est un canal multiplex, sur lequel sont multiplexés au moins deux sous-canaux ; et en ce que lesdites secondes ressources de communication sont au moins un sous-canal extrait dudit multiplex et auquel est affecté un code non utilisé par ladite station de base.

En d'autres termes, dans ce troisième exemple préférentiel, l'élément de répétition distant est alimenté par la station de base en FDD large bande. Cette large bande véhicule, sur une bande de largeur inférieure ou égale à 384 kbits/s, un multiplex de sous-canaux associés chacun à un code distinct (les codes étant orthogonaux entre eux). Par ailleurs, l'élément de répétition distant effectue une répétition en FDD. Cette répétition consiste à distribuer le multiplex en sous-canaux de bande étroite (bande de largeur inférieure ou égale à 64 kbits/s), et notamment en sous-canaux de téléphonie (8 kbits/s ou 13 kbits/s).

Dans un quatrième exemple préférentiel dudit premier mode de réalisation, lesdits premier et second modes de radiocommunication sont les modes W/CDMA et TD/CDMA respectivement ; ladite partie des premières ressources de communication est un canal multiplex, sur lequel sont multiplexés au moins deux sous-canaux ; et lesdites secondes ressources de communication sont au moins un sous-canal extrait dudit multiplex et auquel est affecté un code non utilisé par ladite station de base.

Ce quatrième exemple préférentiel se distingue du troisième uniquement en ce que la répétition est effectuée en TDD (avec le mode TD/CDMA) et non pas en FDD (avec le mode W/CDMA).

Dans un cinquième exemple préférentiel dudit premier mode de réalisation, lesdits premier et second modes de radiocommunication sont les modes W/CDMA et TDMA respectivement ; et ladite partie des premières ressources et lesdites secondes ressources de communication sont respectivement au moins un premier canal, véhiculé par une bande de fréquence, et au moins un second canal, véhiculé par un jeu de fréquence n'appartenant pas à ladite bande de fréquence.

Ainsi, l'élément de répétition distant effectue une répétition dans le mode TDMA du GSM, du DCS, ou encore du PCS. On profite ici du fait que le système UMTS doit être compatible avec les autres systèmes existants (GSM, DCS et PCS).

L'objectif précité, ainsi que d'autres qui apparaîtront par la suite, sont également atteints selon un second mode de réalisation de l'invention, à l'aide d'un système de radiocommunication cellulaire, du type comprenant au moins une station de base et au moins un dispositif de répétition de données destiné à assurer, en aval de ladite station de base, une interface radio dans une zone géographique prédéterminée, dite zone de répétition, pour une partie d'un flux de données géré en amont par ladite station de base, ladite station de base fonctionnant selon un premier mode de radiocommunication et avec de premières ressources de communication,
caractérisé en ce que ledit dispositif de répétition comprend un élément de répétition proche de ladite station de base et un élément de répétition distant de ladite station de base,
en ce que ledit élément de répétition proche est relié à la station de base et assure vis-à-vis de la station de base une conversion, correspondant au passage d'une partie desdites premières ressources de communication et dudit premier mode de radiocommunication à de secondes ressources de communication et à un second mode de radiocommunication, et réciproquement, ledit second mode de radiocommunication et/ou lesdites secondes ressources de communication étant distincts respectivement dudit premier mode de radiocommunication et de ladite partie des premières ressources de communication,
en ce que lesdites secondes ressources de communication sont utilisées pour relier, sous forme de liaison selon ledit second mode de radiocommunication, l'élément de répétition proche et l'élément de répétition distant,
et en ce que ledit élément de répétition distant assure une conversion, correspondant au passage desdites secondes ressources de communication et dudit second mode de radiocommunication à de troisièmes ressources de communication et à un troisième mode de radiocommunication, et réciproquement, ledit troisième mode de radiocommunication et/ou lesdites troisièmes ressources de communication étant distincts respectivement dudit second mode de radiocommunication et desdites secondes ressources de communication,
ledit élément de répétition distant et au moins une station mobile se trouvant dans ladite zone de répétition échangeant des données selon ledit troisième mode de radiocommunication et en utilisant lesdites troisièmes ressources de communication.

On notera que dans ce second mode de réalisation de l'invention, le dispositif de répétition comprend, outre l'élément de répétition distant, un élément de répétition proche de la station de base. Cependant, de même que le premier mode de réalisation discuté ci-dessus, ce second mode de réalisation repose sur un double principe.

En effet, il consiste, d'une part, à utiliser le (second) mode et les (secondes) ressources de communication de l'élément de répétition proche pour relier l'élément de répétition proche et l'élément de répétition distant. En d'autres termes, l'élément de répétition proche utilise des canaux de communication pour communiquer avec l'élément de répétition distant, ce dernier se comportant vis-à-vis de l'élément de répétition proche comme une ou plusieurs stations mobiles arrêtées. Ainsi, la présente invention ne nécessite ni station de base supplémentaire, ni liaison spécialisée, et constitue donc une solution beaucoup moins coûteuse que les solutions connues précitées.

Ce second mode de réalisation est notamment parfaitement adapté lorsque le premier mode de réalisation précité ne peut pas être mis en oeuvre. Ceci est par exemple le cas avec une station de base fonctionnant selon un mode de radiocommunication "bande étroite", tel que le mode TDMA du GSM ou du DCS. En effet, lorsque la station de base gère un flux de données peu important, il est difficile d'affecter une partie de ce flux à la liaison hertzienne de radiocommunication avec l'élément de répétition distant. C'est pourquoi il convient d'utiliser un élément de répétition proche, qui assure, dès la sortie de la station de base, une première conversion de ressources et/ou de mode de radiocommunication. Une seconde conversion, en vue de la répétition vers les stations mobiles présentes dans la zone de répétition, est par ailleurs effectuée par l'élément de répétition distant.

Ce second mode de réalisation de l'invention consiste, d'autre part, à différencier l'amont et l'aval de l'élément de répétition distant. En effet, selon l'invention, en amont, l'élément de répétition distant communique avec l'élément de répétition proche selon le second mode de radiocommunication et en utilisant les secondes ressources de communication, tandis qu'en aval, l'élément de répétition distant communique avec des stations mobiles selon le troisième mode de radiocommunication et en utilisant les troisièmes ressources de communication. De cette façon, on réduit ou supprime les sources d'interférence et/ou de brouillage. En outre, on évite tout risque d'accrochage de l'amont vers l'aval.

De façon préférentielle, ladite liaison entre l'élément de répétition proche et l'élément de répétition distant, selon ledit second mode de radiocommunication et utilisant lesdites secondes ressources de communication, appartient au groupe comprenant : les liaisons hertziennes, les liaisons optiques, les liaisons filaires haut débit (type HDSL).

On notera que les secondes ressources ne font pas obligatoirement partie des ressources réservées à la communication avec les stations mobiles. En effet, dans le cadre du second mode de réalisation de l'invention, les secondes ressources ne sont pas utilisées pour établir des radiocommunications avec des stations mobiles, mais pour relier l'élément de répétition proche à l'élément de répétition distant. Seules les premières et troisièmes ressources sont utilisées, par la station de base et l'élément de répétition distant respectivement, pour établir des radiocommunications avec des stations mobiles.

De façon avantageuse, ladite liaison selon le second mode de radiocommunication étant hertzienne, caractérisé en ce que l'élément de répétition proche et l'élément de répétition distant comprennent chacun au moins une antenne intelligente directive pour mettre en oeuvre ladite liaison hertzienne.

Ainsi, de même que pour le premier mode de réalisation, il s'agit donc d'une utilisation avantageuse de la technique de multiplexage spatial (ou SDMA).

Préférentiellement, lesdits premier et troisième modes de radiocommunication appartiennent au groupe comprenant : le mode TDMA du GSM 900, le mode TDMA du DCS 1800, le mode TDMA du PCS 1900, le mode TDMA du standard IS 136, le mode TDMA du PDC, ... ; et ledit second mode de radiocommunication appartient au groupe comprenant : le mode W/CDMA de l'UMTS, le mode TD/CDMA de l'UMTS, le mode TDMA du GSM 900, le mode TDMA du DCS 1800, le mode TDMA du PCS 1900, le mode TDMA du standard IS 136, le mode TDMA du PDC, ...

Dans un premier exemple préférentiel dudit second mode de réalisation, lesdits premier, second et troisième modes de radiocommunication sont tous les trois le mode W/CDMA ; et ladite partie des premières ressources et lesdites secondes et troisièmes ressources de communication sont respectivement au moins un premier canal, véhiculé par une première bande de fréquence, au moins un second canal, véhiculé par une seconde bande de fréquence, et au moins un troisième canal, véhiculé par une troisième bande de fréquence, ladite seconde bande de fréquence étant distincte desdites première et troisième bandes de fréquence.

Ainsi, l'élément de répétition proche assure une première conversion de ressources consistant en une première transposition de fréquences, et l'élément de répétition distant assure une seconde conversion consistant en une seconde transposition de fréquences.

On rappelle que la seconde bande de fréquence (qui est dans le cas présent la seconde ressource) peut ne pas faire partie des bandes de fréquence réservées, dans le cadre de l'UMTS, à la radiocommunication selon le mode W/CDMA.

On notera également que les première et troisième bandes de fréquence peuvent être identiques, si la distance entre l'élément de répétition distant et la station de base est suffisamment grande pour éviter (ou rendre très faibles) les risques de brouillage et/ou d'interférence entre ces deux éléments.

Dans un second exemple préférentiel dudit second mode de réalisation, lesdits premier, second et troisième modes de radiocommunication sont tous les trois le mode TDMA ; et ladite partie des premières ressources et lesdites secondes et troisièmes ressources de communication sont respectivement au moins un premier canal, véhiculé par un premier jeu de fréquence, au moins un second canal, véhiculé par un second jeu de fréquence, et au moins un troisième canal, véhiculé par un troisième jeu de fréquence, ledit second jeu de fréquence étant distinct desdits premier et troisième jeux de fréquence.

De même que dans le premier exemple préférentiel du second mode de réalisation, l'élément de répétition proche assure une première conversion de ressources consistant en une première transposition de fréquences, et l'élément de répétition distant assure une seconde conversion consistant en une seconde transposition de fréquences. Entre ces premier et second exemples, seul le mode de radiocommunication (W/CDMA et TDMA respectivement) diffère.

Dans un troisième exemple préférentiel dudit second mode de réalisation, lesdits premier et troisième modes de radiocommunication sont tous les deux le mode TDMA ; ue ledit second mode de radiocommunication est le mode W/CDMA ; et ladite partie des premières ressources et lesdites secondes et troisièmes ressources de communication sont respectivement au moins un premier canal, véhiculé par un premier jeu de fréquence, au moins un second canal, véhiculé par une bande de fréquence, et au moins un troisième canal, véhiculé par un second jeu de fréquence, ladite bande de fréquence ne comprenant pas les fréquences desdits premier et second jeux de fréquence.

Dans ce cas, le mode W/CDMA de l'UMTS n'est utilisé que pour la liaison entre l'élément de répétition proche et l'élément de répétition distant.

Avantageusement, au moins deux dispositifs de répétition de données sont reliés en cascade en aval de ladite station de base, l'élément de répétition distant d'un premier dispositif de répétition, disposé en amont d'un second dispositif de répétition, se comportant vis-à-vis dudit second dispositif de répétition comme ladite station de base vis-à-vis dudit premier dispositif de répétition.

L'invention concerne également deux modes de réalisation d'un dispositif de répétition de données au sein d'un système de radiocommunication.

D'autres caractéristiques et avantages de l'invention apparaîtront à la lecture de la description suivante de deux modes de réalisation préférentiels de l'invention, avec pour chacun différents exemples, donnés à titre d'exemple indicatif et non limitatif, et des dessins annexés, dans lesquels :
- la figure 1 présente une vue schématique d'un premier mode de réalisation d'un système de radiocommunication selon l'invention, mettant en oeuvre une répétition de données en aval d'une station de base ;
- les figures 2 à 6 présentent chacune un exemple préférentiel distinct dudit premier mode de réalisation présenté sur la figure 1 ;
- la figure 7 présente une vue schématique d'un second mode de réalisation d'un système de radiocommunication selon l'invention, mettant en oeuvre une répétition de données en aval d'une station de base ;
- les figures 8 à 10 présentent chacune un exemple préférentiel distinct dudit second mode de réalisation présenté sur la figure 2.

L'invention concerne donc un système de radiocommunication (avec des stations mobiles) mettant en oeuvre une répétition de données en aval d'une station de base.

De façon classique, une station de base (ou BTS, pour "Base Transceiver Station" en anglais) assure une interface (ou couverture) radio au sein d'une cellule géographique, de façon à gérer toutes les communications avec des stations mobiles présentes dans cette cellule. On suppose, dans la suite de la description, que la station de base fonctionne selon un premier mode de radiocommunication et avec de premières ressources de communication.

On rappelle que la taille de la cellule et/ou la couverture radio assurée au sein de la cellule sont parfois insuffisantes. Par exemple, si la cellule géographique englobe une zone présentant un relief difficile (telle qu'une zone encaissée notamment), il est fréquent que la station de base ne puisse pas communiquer avec des stations mobiles se trouvant dans cette zone. De même, dans les régions à faible densité de trafic, il est difficile, pour des raisons de coûts, d'assurer une couverture radio complète. Il existe donc des zones actuellement non couvertes, et dans lesquelles on souhaite assurer une couverture radio sans pour autant ajouter de nouvelles stations de base au système.

Dans ce cas, il convient de compléter le réseau de cellules existant en utilisant au moins un dispositif de répétition de données (ou "répéteur") dans chaque zone géographique non couverte, appelée par la suite "zone de répétition".

La répétition de données peut être résumée ainsi :
- d'une part, dans le sens descendant (station de base vers stations mobiles), la station de base transmet des données au dispositif de répétition, que ce dernier retransmet aux stations mobiles concernées se trouvant dans la zone de répétition ;
- d'autre part, dans le sens montant (stations mobiles vers station de base), les stations mobiles se trouvant dans la zone de répétition transmettent des données au dispositif de répétition, que ce dernier retransmet à la station de base.

Le dispositif de répétition de données répète donc une partie du flux de données (dans les sens montant et descendant) géré par la station de base, à savoir la partie concernant les stations mobiles présentes dans la zone de répétition. Il est important de noter qu'il n'est pas relié à un contrôleur de stations de base (ou BSC pour "Base Station Controller" en anglais) mais à une station de base.

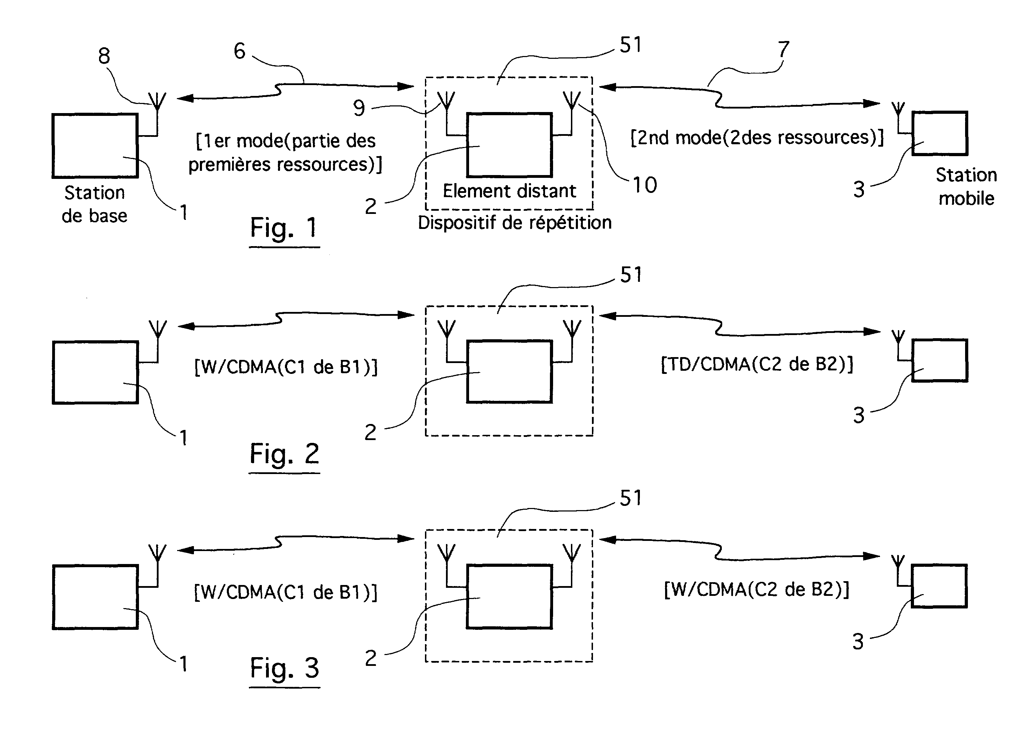

Par souci de simplification, seuls les éléments du système de radiocommunication qui sont mis en jeux dans le cadre de la présente invention ont été représentés sur chacune des figures 1 à 10, à savoir : la station de base 1, le dispositif de répétition 51 ou 52, et une station mobile 3 (il est clair cependant qu'il en existe en réalité une pluralité possible) se trouvant dans la zone de répétition.

On présente maintenant, en relation avec les figures 1 à 6, un premier mode de réalisation de l'invention.

D'une façon générale, et comme présenté sur le schéma de la figure 1, dans le premier mode de réalisation, le dispositif de répétition 51 comprend un élément de répétition distant 2, qui est relativement éloigné de la station de base 1. Il se trouve par exemple à quelques kilomètres de la station de base 1.

Une partie des premières ressources de communication allouées à la station de base 1 est utilisée pour relier, sous forme de liaison hertzienne 6 selon le premier mode de radiocommunication, la station de base 1 et l'élément de répétition distant 2. En d'autres termes, la station de base 1 échangent des données avec l'élément de répétition distant 2 comme s'il s'agissait d'une ou plusieurs stations mobiles présentes dans la cellule.

Pour mettre en oeuvre la liaison hertzienne 6 selon le premier mode de radiocommunication, la station de base 1 et l'élément de répétition distant 2 comprennent par exemple chacun une antenne intelligente directive 8, 9.

On rappelle qu'une antenne intelligente directive, ou antenne intelligente à adaptation de faisceaux ("Adaptative Smart Antennas"), comprend un réseau d'éléments rayonnants répartis matriciellement sur un support (ou panneau). Le réseau d'éléments rayonnants est composé d'une pluralité de colonnes d'éléments rayonnants, pilotée chacune indépendamment des autres et permettant de former un faisceau selon un azimut donné. En jouant, colonne par colonne, sur la phase et la puissance de chacun des éléments rayonnants, la station de base pilote l'antenne de façon que celle-ci génère un faisceau rayonnant radioélectrique directif, et orienté en azimut, vers une station mobile donnée. En d'autres termes, le diagramme de rayonnement de l'antenne est pointé (ou encore focalisé) sur la station mobile en communication.

Il est à noter que, de façon à encore améliorer la directivité et le gain des antennes intelligentes comprises dans la station de base 1 et l'élément de répétition distant 2, on peut prévoir d'orienter les faisceaux rayonnants radioélectriques, non seulement en azimut, amis aussi en site. Une telle technique est décrite dans la demande de brevet française n° 98 08782 (non publiée), au nom du même déposant. Selon cette technique, l'orientation du faisceau de réception (respectivement d'émission) est réalisée à la fois en site et en azimut, au moyen d'une action sur les paramètres de réception (respectivement d'émission) de chacun des éléments rayonnants, différemment l'un par rapport à l'autre.

Le nombre et la capacité des canaux alloués à la liaison hertzienne 6 précitée sont fonction de la quantité de trafic renvoyée par la station de base 1 vers l'élément de répétition distant 2. Ils peuvent être prédéterminés et fixe. Optionnellement, on peut prévoir que la quantité de trafic renvoyé vers l'élément de répétition distant 2 (et donc la partie des premières ressources de communication qui est utilisée pour relier la station de base 1 et l'élément de répétition distant 2) est variable et allouée de façon dynamique.

L'élément de répétition distant 2 assure une conversion de ressources et/ou de mode. Il permet de passer d'une partie des premières ressources de communication et du premier mode de radiocommunication à de secondes ressources de communication et à un second mode de radiocommunication, et réciproquement. Le second mode de radiocommunication et/ou les secondes ressources de communication sont distincts respectivement du premier mode de radiocommunication et des premières ressources de communication.

L'élément de répétition distant 2 et la station mobile 1 échangent des données selon le second mode de radiocommunication et en utilisant les secondes ressources de communication. Cet échange de données est bien sûr effectué sous la forme d'une liaison hertzienne 7, puisqu'il implique la station mobile 3. Pour mettre en oeuvre la liaison hertzienne 7 avec la station mobile 3, l'élément de répétition distant 2 comprend par exemple une antenne panneau 10.

On présente maintenant, en relation avec les figures 2 à 6, plusieurs exemples préférentiels du premier mode de réalisation présenté sur la figure 1.

Dans le premier exemple du premier mode de réalisation (cf fig.2), les premier et second modes de radiocommunication sont les modes W/CDMA et TD/CDMA respectivement de l'UMTS. La partie précitée des premières ressources et les secondes ressources de communication sont respectivement (au moins) un premier canal C1, véhiculé par une première bande de fréquence B1, et (au moins) un second canal C2, véhiculé par une seconde bande de fréquence B2, distincte de la première bande de fréquence B1. Les premières et secondes bandes de fréquences B1, B2, typiquement d'environ 5 MHz chacune, sont réservées à l'UMTS. Dans l'élément de répétition distant 2, la conversion de ressources et de mode pour les signaux reçus en provenance de la station de base 1 est par exemple effectuée de la façon suivante : démodulation des signaux reçus selon le mode W/CDMA et sur le premier canal de la première bande de fréquence B1 ; passage en bande de base ; contrôle de la pertinence des codes, et éventuellement changement de certains codes ; et modulation des signaux à émettre, vers la station mobile 3, selon le mode TD/CDMA et sur le second canal de la seconde bande de fréquence B1.

Le second exemple du premier mode de réalisation (cf fig.3) se distingue du premier exemple du premier mode de réalisation (décrit ci-dessus) uniquement en ce que le second mode de radiocommunication est le mode W/CDMA et non pas le mode TD/CDMA de l'UMTS.

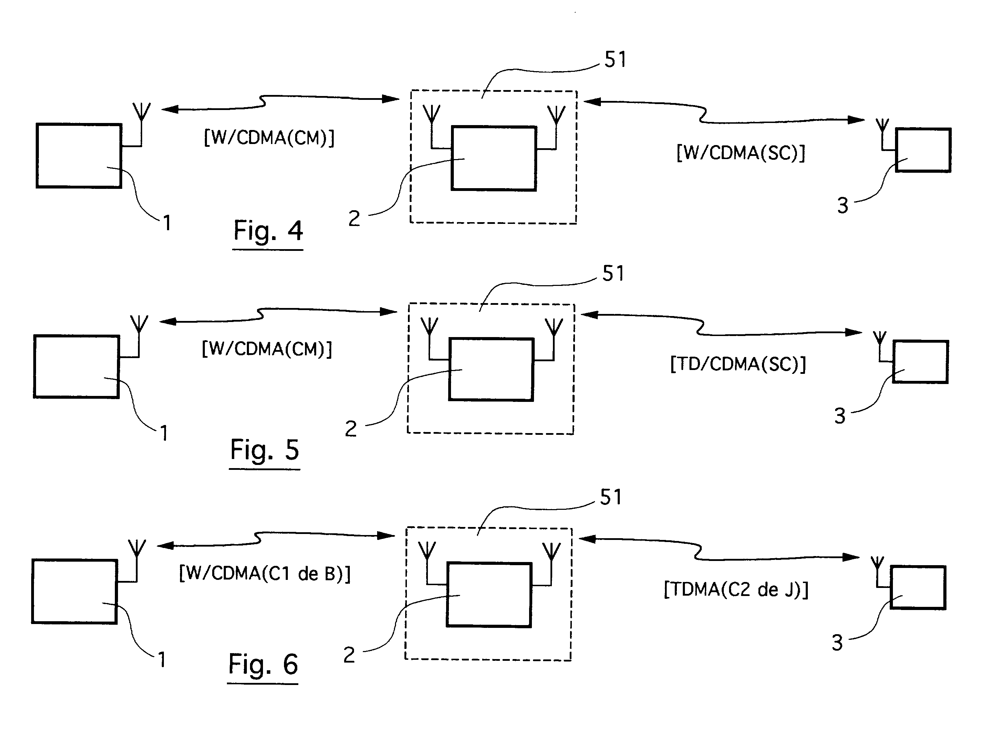

Dans le troisième exemple du premier mode de réalisation (cf fig.4), les premier et second modes de radiocommunication sont tous les deux le mode W/CDMA de l'UMTS. La partie des premières ressources de communication est un canal multiplex CM, sur lequel sont multiplexés au moins deux sous-canaux. Les secondes ressources de communication sont au moins un sous-canal SC extrait du multiplex précité et auquel est affecté un code non utilisé par la station de base pour communiquer avec des stations mobiles présentes dans sa cellule. Il convient donc d'effectuer une recherche des codes non utilisés par la station de base, puis une affectation de ces codes non utilisés à l'élément de répétition distant 2.

Le quatrième exemple du premier mode de réalisation (cf fig.5) se distingue du troisième exemple du premier mode de réalisation (décrit ci-dessus) uniquement en ce que le second mode de radiocommunication est le mode TD/CDMA et non pas le mode W/CDMA de l'UMTS.

Dans le cinquième exemple du premier mode de réalisation (cf fig.6), les premier et second modes de radiocommunication sont respectivement le modes W/CDMA de l'UMTS et le mode TDMA du GSM (ou du DCS, du PCS, ...). La partie des premières ressources et les secondes ressources de communication sont respectivement (au moins) un premier canal C1, véhiculé par une bande de fréquence B, et (au moins) un second canal C2, véhiculé par un jeu de fréquence J n'appartenant pas à la bande de fréquence précitée B.

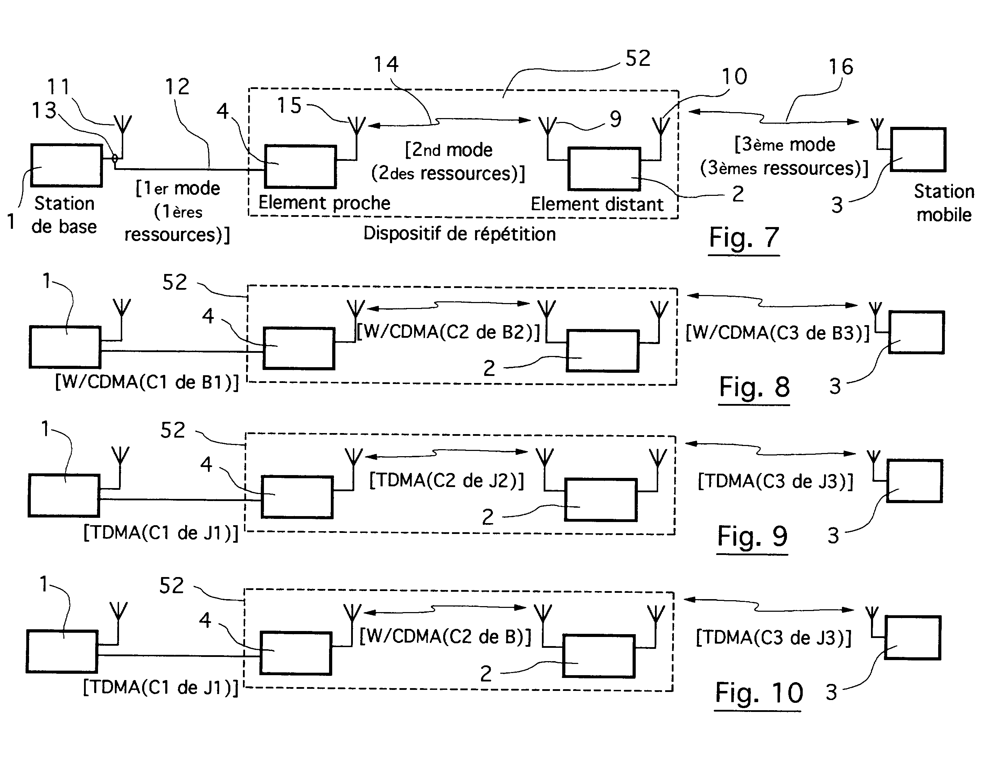

On présente maintenant, en relation avec les figures 7 à 10, un second mode de réalisation de l'invention.

D'une façon générale, et comme présenté sur le schéma de la figure 7, dans le second mode de réalisation, le dispositif de répétition 52 comprend un élément de répétition proche 4 et un élément de répétition distant 2.

L'élément de répétition proche 4 se trouve par exemple sur le site même de la station de base 1. Il peut être relié à celle-ci par une liaison coaxiale 12 de quelques mètres, dont l'extrémité comporte un coupleur 13 (par exemple à - 30 dB) permettant de dériver une partie des signaux émis et/ou reçus par l'antenne 11 de la station de base 1. Cette antenne 11 est celle que la station de base 1 utilise pour communiquer avec des stations mobiles présentes dans sa cellule.

L'élément de répétition proche 4 assure vis-à-vis de la station de base 1 une conversion de ressources et/ou de mode. Cette conversion permet de passer d'une partie des premières ressources de communication et du premier mode de radiocommunication à de secondes ressources de communication et à un second mode de radiocommunication, et réciproquement. Le second mode de radiocommunication et/ou les secondes ressources de communication sont distincts respectivement du premier mode de radiocommunication et de la partie des premières ressources de communication.

Les secondes ressources de communication sont utilisées pour relier, sous forme de liaison 14 selon le second mode de radiocommunication, l'élément de répétition proche 4 et l'élément de répétition distant 2. L'élément de répétition proche 4 et l'élément de répétition distant 2 sont par exemple espacés de quelques kilomètres.

On notera que la liaison 14 précitée, n'étant pas utilisée pour communiquer directement avec des stations mobiles, elle n'est pas obligatoirement mise en oeuvre dans une bande de fréquence ou avec un jeu de fréquence réservé à cet effet par les autorités compétentes. Ainsi, dans le cas d'un système UMTS, la liaison peut être mise en oeuvre avec des bandes "non UMTS", situées par exemple vers 3,5 GHz (même si la transmission sur la porteuse de transmission reste elle au standard UMTS). Selon un autre exemple, les "bandes non UMTS" utilisées se situent en fréquences optiques, avec transmission sur fibre optique (avec par exemple deux longueurs d'onde, chacune pour un sens de transmission).

Dans le cas où la liaison 14 selon le second mode de radiocommunication est hertzienne, l'élément de répétition proche 4 et l'élément de répétition distant 2 peuvent comprendre chacun au moins une antenne intelligente directive 15, 9 pour mettre en oeuvre cette liaison hertzienne 14.

L'élément de répétition distant 2 assure une conversion de ressources et/ou de mode. Cette conversion permet de passer des secondes ressources de communication et du second mode de radiocommunication à de troisièmes ressources de communication et à un troisième mode de radiocommunication, et réciproquement. Le troisième mode de radiocommunication et/ou les troisièmes ressources de communication sont distincts respectivement du second mode de radiocommunication et des secondes ressources de communication.

L'élément de répétition distant 2 et la station mobile 3 échangent des données selon le troisième mode de radiocommunication et en utilisant les troisièmes ressources de communication. Cet échange de données est bien sûr effectué sous la forme d'une liaison hertzienne 16, puisqu'il implique la station mobile 3. Pour mettre en oeuvre la liaison hertzienne 16 avec la station mobile 3, l'élément de répétition distant 2 comprend par exemple une antenne panneau 10.

On présente maintenant, en relation avec les figures 8 à 10, plusieurs exemples préférentiels du second mode de réalisation présenté sur la figure 7.

Dans le premier exemple du second mode de réalisation (cf fig.8), les premier, second et troisième modes de radiocommunication sont tous les trois le mode W/CDMA de l'UMTS. La partie précitée des premières ressources et les secondes et troisièmes ressources de communication sont respectivement (au moins) un premier canal C1, véhiculé par une première bande de fréquence B1, (au moins) un second canal C2, véhiculé par une seconde bande de fréquence B2, et (au moins) un troisième canal C3, véhiculé par une troisième bande de fréquence B3. La seconde bande de fréquence B2 est distincte des première et troisième bandes de fréquence B1, B3.

Dans le second exemple du second mode de réalisation (cf fig.9), les premier, second et troisième modes de radiocommunication sont tous les trois le mode TDMA du GSM (ou du DCS, du PCS, ...). La partie précitée des premières ressources et les secondes et troisièmes ressources de communication sont respectivement (au moins) un premier canal C1, véhiculé par un premier jeu de fréquence J1, (au moins) un second canal C2, véhiculé par un second jeu de fréquence J2, et (au moins) un troisième canal C3, véhiculé par un troisième jeu de fréquence J3. Le second jeu de fréquence J2 est distinct des premier et troisième jeux de fréquence J1, J3.

Dans le troisième exemple du second mode de réalisation (cf fig.10), les premier et troisième modes de radiocommunication sont tous les deux le mode TDMA du GSM (ou du DCS, du PCS, ...). Le second mode de radiocommunication est le mode W/CDMA de l'UMTS. La partie précitée des premières ressources et les secondes et troisièmes ressources de communication sont respectivement (au moins) un premier canal C1, véhiculé par un premier jeu de fréquence J1, (au moins) un second canal C2, véhiculé par une bande de fréquence B, et (au moins) un troisième canal C3, véhiculé par un second jeu de fréquence J2. La bande de fréquence B ne comprend pas les fréquences des premier et second jeux de fréquence J1, J2.

Il est clair que de nombreux autres exemples de l'invention peuvent être envisagés, tant pour le premier mode de réalisation que pour le second.

On peut notamment de prévoir de cascader au moins deux dispositifs de répétition de données, en aval de la station de base 1. On suppose par exemple qu'un second dispositif de répétition est disposé en aval d'un premier dispositif de répétition, lui-même disposé en aval de la station de base 1. Il convient dans ce cas que le comportement de l'élément de répétition distant du premier dispositif de répétition vis-à-vis du second dispositif de répétition soit le même que celui de la station de base vis-à-vis du premier dispositif de répétition.

## Revendications

1. Système de radiocommunication cellulaire, du type comprenant au moins une station de base (1) et au moins un dispositif de répétition de données (51) destiné à assurer, en aval de ladite station de base, une interface radio dans une zone géographique prédéterminée, dite zone de répétition, pour une partie d'un flux de données géré en amont par ladite station de base, ladite station de base fonctionnant selon un premier mode de radiocommunication et avec de premières ressources de communication,
caractérisé en ce que ledit dispositif de répétition comprend un élément de répétition distant (2) de ladite station de base,
en ce qu'une partie desdites premières ressources de communication est utilisée pour relier, sous forme de liaison hertzienne (6) selon ledit premier mode de radiocommunication, la station de base et l'élément de répétition distant,
et en ce que ledit élément de répétition distant assure une conversion, correspondant au passage de ladite partie des premières ressources de communication et dudit premier mode de radiocommunication à de secondes ressources de communication et à un second mode de radiocommunication, et réciproquement, ledit second mode de radiocommunication et/ou lesdites secondes ressources de communication étant distincts respectivement dudit premier mode de radiocommunication et de ladite partie des premières ressources de communication,
ledit élément de répétition distant et au moins une station mobile (3) se trouvant dans ladite zone de répétition échangeant des données selon ledit second mode de radiocommunication et en utilisant lesdites secondes ressources de communication.

2. Système de radiocommunication cellulaire selon la revendication 1, caractérisé en ce que la station de base (1) et l'élément de répétition distant (2) comprennent chacun au moins une antenne intelligente directive (8, 9) pour mettre en oeuvre ladite liaison hertzienne (6) selon le premier mode de radiocommunication.

3. Système de radiocommunication cellulaire selon l'une quelconque des revendications 1 et 2, caractérisé en ce que ladite partie des premières ressources de communication, qui est utilisée pour relier la station de base (1) et l'élément de répétition distant (2), est variable et allouée de façon dynamique.

4. Système de radiocommunication cellulaire selon l'une quelconque des revendications 1 à 3, caractérisé en ce que ledit premier mode de radiocommunication appartient au groupe comprenant :
- le mode W/CDMA de l'UMTS ;
- le mode CDMA du standard IS 95 ;
et en ce que ledit second mode de radiocommunication appartient au groupe comprenant :
- le mode W/CDMA de l'UMTS ;
- le mode TD/CDMA de l'UMTS ;
- le mode TDMA du GSM 900 ;
- le mode TDMA du DCS 1800 ;
- le mode TDMA du PCS 1900 ;
- le mode CDMA du standard IS 95.

5. Système de radiocommunication cellulaire selon l'une quelconque des revendications 1 à 3, caractérisé en ce que lesdits premier et second modes de radiocommunication sont les modes W/CDMA et TD/CDMA respectivement,
et en ce que ladite partie des premières ressources et lesdites secondes ressources de communication sont respectivement au moins un premier canal (C1), véhiculé par une première bande de fréquence (B1), et au moins un second canal (C2), véhiculé par une seconde bande de fréquence (B2).

6. Système de radiocommunication cellulaire selon l'une quelconque des revendications 1 à 3, caractérisé en ce que lesdits premier et second modes de radiocommunication sont tous les deux le mode W/CDMA,
et en ce que ladite partie des premières ressources et lesdites secondes ressources de communication sont respectivement au moins un premier canal (C1), véhiculé par une première bande de fréquence (B1), et au moins un second canal (C2), véhiculé par une seconde bande de fréquence (B2), distincte de ladite première bande de fréquence.

7. Système de radiocommunication cellulaire selon l'une quelconque des revendications 1 à 3, caractérisé en ce que lesdits premier et second modes de radiocommunication sont tous les deux le mode W/CDMA,
en ce que ladite partie des premières ressources de communication est un canal multiplex (CM), sur lequel sont multiplexés au moins deux sous-canaux,
et en ce que lesdites secondes ressources de communication sont au moins un sous-canal (SC) extrait dudit multiplex et auquel est affecté un code non utilisé par ladite station de base.

8. Système de radiocommunication cellulaire selon l'une quelconque des revendications 1 à 3, caractérisé en ce que lesdits premier et second modes de radiocommunication sont les modes W/CDMA et TD/CDMA respectivement,
en ce que ladite partie des premières ressources de communication est un canal multiplex (CM), sur lequel sont multiplexés au moins deux sous-canaux,
et en ce que lesdites secondes ressources de communication sont au moins un sous-canal (SC) extrait dudit multiplex et auquel est affecté un code non utilisé par ladite station de base.

9. Système de radiocommunication cellulaire selon l'une quelconque des revendications 1 à 3, caractérisé en ce que lesdits premier et second modes de radiocommunication sont les modes W/CDMA et TDMA respectivement,
et en ce que ladite partie des premières ressources et lesdites secondes ressources de communication sont respectivement au moins un premier canal (C1), véhiculé par une bande de fréquence (B), et au moins un second canal C2), véhiculé par un jeu de fréquence (J) n'appartenant pas à ladite bande de fréquence.

10. Système de radiocommunication cellulaire, du type comprenant au moins une station de base (1) et au moins un dispositif de répétition de données (52) destiné à assurer, en aval de ladite station de base, une interface radio dans une zone géographique prédéterminée, dite zone de répétition, pour une partie d'un flux de données géré en amont par ladite station de base, ladite station de base fonctionnant selon un premier mode de radiocommunication et avec de premières ressources de communication,
caractérisé en ce que ledit dispositif de répétition comprend un élément de répétition proche (4) de ladite station de base et un élément de répétition distant (2) de ladite station de base,
en ce que ledit élément de répétition proche est relié à la station de base et assure vis-à-vis de la station de base une conversion, correspondant au passage d'une partie desdites premières ressources de communication et dudit premier mode de radiocommunication à de secondes ressources de communication et à un second mode de radiocommunication, et réciproquement, ledit second mode de radiocommunication et/ou lesdites secondes ressources de communication étant distincts respectivement dudit premier mode de radiocommunication et de ladite partie des premières ressources de communication,
en ce que lesdites secondes ressources de communication sont utilisées pour relier, sous forme de liaison (14) selon ledit second mode de radiocommunication, l'élément de répétition proche (4) et l'élément de répétition distant (2),
et en ce que ledit élément de répétition distant assure une conversion, correspondant au passage desdites secondes ressources de communication et dudit second mode de radiocommunication à de troisièmes ressources de communication et à un troisième mode de radiocommunication, et réciproquement, ledit troisième mode de radiocommunication et/ou lesdites troisièmes ressources de communication étant distincts respectivement dudit second mode de radiocommunication et desdites secondes ressources de communication,
ledit élément de répétition distant et au moins une station mobile (3) se trouvant dans ladite zone de répétition échangeant des données selon ledit troisième mode de radiocommunication et en utilisant lesdites troisièmes ressources de communication.

11. Système de radiocommunication cellulaire selon la revendication 10, caractérisé en ce que ladite liaison (14) entre l'élément de répétition proche et l'élément de répétition distant, selon ledit second mode de radiocommunication et utilisant lesdites secondes ressources de communication, appartient au groupe comprenant :
- les liaisons hertziennes :
- les liaisons optiques ;
- les liaisons filaires haut débit.

12. Système de radiocommunication cellulaire selon l'une quelconque des revendications 10 et 11, ladite liaison selon le second mode de radiocommunication étant hertzienne, caractérisé en ce que l'élément de répétition proche et l'élément de répétition distant comprennent chacun au moins une antenne intelligente directive (15, 9) pour mettre en oeuvre ladite liaison hertzienne.

13. Système de radiocommunication cellulaire selon l'une quelconque des revendications 10 à 12, caractérisé en ce que lesdits premier et troisième modes de radiocommunication appartiennent au groupe comprenant :
- le mode TDMA du GSM 900 ;
- le mode TDMA du DCS 1800 ;
- le mode TDMA du PCS 1900 ;
- le mode TDMA du standard IS 136 ;
- le mode TDMA du PDC ;
et en ce que ledit second mode de radiocommunication appartient au groupe comprenant :
- le mode W/CDMA de l'UMTS ;
- le mode TD/CDMA de l'UMTS ;
- le mode TDMA du GSM 900 ;
- le mode TDMA du DCS 1800 ;
- le mode TDMA du PCS 1900 ;
- le mode TDMA du standard IS 136 ;
- le mode TDMA du PDC.

14. Système de radiocommunication cellulaire selon l'une quelconque des revendications 10 à 12, caractérisé en ce que lesdits premier, second et troisième modes de radiocommunication sont tous les trois le mode W/CDMA,
et en ce que ladite partie des premières ressources et lesdites secondes et troisièmes ressources de communication sont respectivement au moins un premier canal (C1), véhiculé par une première bande de fréquence (B1), au moins un second canal (C2), véhiculé par une seconde bande de fréquence (B2), et au moins un troisième canal (C3), véhiculé par une troisième bande de fréquence (B3), ladite seconde bande de fréquence étant distincte desdites première et troisième bandes de fréquence.

15. Système de radiocommunication cellulaire selon l'une quelconque des revendications 10 à 12, caractérisé en ce que lesdits premier, second et troisième modes de radiocommunication sont tous les trois le mode TDMA,
et en ce que ladite partie des premières ressources et lesdites secondes et troisièmes ressources de communication sont respectivement au moins un premier canal (C1), véhiculé par un premier jeu de fréquence (J1), au moins un second canal (C2), véhiculé par un second jeu de fréquence (J2), et au moins un troisième canal (C3), véhiculé par un troisième jeu de fréquence (J3), ledit second jeu de fréquence étant distinct desdits premier et troisième jeux de fréquence.

16. Système de radiocommunication cellulaire selon l'une quelconque des revendications 10 à 12, caractérisé en ce que lesdits premier et troisième modes de radiocommunication sont tous les deux le mode TDMA,
en ce que ledit second mode de radiocommunication est le mode W/CDMA,
et en ce que ladite partie des premières ressources et lesdites secondes et troisièmes ressources de communication sont respectivement au moins un premier canal (C1), véhiculé par un premier jeu de fréquence (J1), au moins un second canal (C2), véhiculé par une bande de fréquence (B), et au moins un troisième canal (C3), véhiculé par un second jeu de fréquence (J2), ladite bande de fréquence ne comprenant pas les fréquences desdits premier et second jeux de fréquence.

17. Système de radiocommunication cellulaire selon l'une quelconque des revendications 1 à 16, caractérisé en ce qu'au moins deux dispositifs de répétition de données sont reliés en cascade en aval de ladite station de base (1), l'élément de répétition distant d'un premier dispositif de répétition, disposé en amont d'un second dispositif de répétition, se comportant vis-à-vis dudit second dispositif de répétition comme ladite station de base vis-à-vis dudit premier dispositif de répétition.

18. Dispositif de répétition de données (51) au sein d'un système de radiocommunication cellulaire, du type destiné à assurer, en aval d'une station de base (1), une interface radio dans une zone géographique prédéterminée, pour une partie d'un flux de données géré en amont par ladite station de base, ladite station de base fonctionnant selon un premier mode de radiocommunication et avec de premières ressources de communication,
caractérisé en ce que ledit dispositif de répétition comprend un élément de répétition distant (2) de ladite station de base,
et en ce que ledit élément de répétition distant comprend :
- de premiers moyens de communication, permettant la mise en oeuvre d'une liaison hertzienne avec ladite station de base, ladite liaison hertzienne étant mise en oeuvre selon ledit premier mode de radiocommunication et utilisant une partie desdites premières ressources de communication ;
- des moyens de conversion, permettant le passage de ladite partie des premières ressources de communication et dudit premier mode de radiocommunication à de secondes ressources de communication et à un second mode de radiocommunication, et réciproquement, ledit second mode de radiocommunication et/ou lesdites secondes ressources de communication étant distincts respectivement dudit premier mode de radiocommunication et de ladite partie des premières ressources de communication,
- de seconds moyens de communication avec au moins une station mobile se trouvant dans ladite zone de répétition, lesdits seconds moyens de communication fonctionnant selon ledit second mode de radiocommunication et utilisant lesdites secondes ressources de communication.

19. Dispositif de répétition de données (52) au sein d'un système de radiocommunication cellulaire, du type destiné à assurer, en aval d'une station de base (1), une interface radio dans une zone géographique prédéterminée, pour une partie d'un flux de données géré en amont par ladite station de base, ladite station de base fonctionnant selon un premier mode de radiocommunication et avec de premières ressources de communication,
caractérisé en ce que ledit dispositif de répétition comprend un élément de répétition proche (4) de ladite station de base et un élément de répétition distant (2) de ladite station de base,
en ce que ledit élément de répétition proche est relié à la station de base et comprend des moyens de conversion, permettant le passage d'une partie desdites premières ressources de communication et dudit premier mode de radiocommunication à de secondes ressources de communication et à un second mode de radiocommunication, et réciproquement, ledit second mode de radiocommunication et/ou lesdites secondes ressources de communication étant distincts respectivement dudit premier mode de radiocommunication et de ladite partie des premières ressources de communication,
en ce que ledit élément de répétition proche et ledit élément de répétition distant comprennent chacun de premiers moyens de communication permettant la mise en oeuvre d'une liaison entre ledit élément de répétition proche et l'élément de répétition distant, ladite liaison étant mise en oeuvre selon ledit second mode de radiocommunication et utilisant une partie desdites secondes ressources de communication,
et en ce que ledit élément de répétition distant comprend :
- des moyens de conversion, permettant le passage desdites secondes ressources de communication et dudit second mode de radiocommunication à de troisièmes ressources de communication et à un troisième mode de radiocommunication, et réciproquement, ledit troisième mode de radiocommunication et/ou lesdites troisièmes ressources de communication étant distincts respectivement dudit second mode de radiocommunication et desdites secondes ressources de communication ;
- de seconds moyens de communication avec au moins une station mobile se trouvant dans ladite zone de répétition, lesdits seconds moyens de communication fonctionnant selon ledit troisième mode de radiocommunication et utilisant lesdites troisièmes ressources de communication.
